(19) Europäisches Patentamt
European Patent Office
Office européen des brevets

(11) **EP 3 425 925 A1**

(12) **EUROPEAN PATENT APPLICATION**

(43) Date of publication:
**09.01.2019 Bulletin 2019/02**

(51) Int Cl.:
***H04R 3/12*** (2006.01)

(21) Application number: **17180255.6**

(22) Date of filing: **07.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Harman Becker Automotive Systems
GmbH
76307 Karlsbad (DE)**

(72) Inventor: **Christoph, Markus
94315 Straubing (DE)**

(74) Representative: **Westphal, Mussgnug & Partner
Patentanwälte mbB
Werinherstrasse 79
81541 München (DE)**

(54) **LOUDSPEAKER-ROOM SYSTEM**

(57)     A loudspeaker-room system that is configured to establish a sound zone includes a room encompassing a listening position, and a loudspeaker arrangement disposed in the room in the vicinity of the listening position, the loudspeaker arrangement configured to receive a multiplicity of electrical loudspeaker drive signals and to convert them into sound radiated to the listening position so that a maximum sound energy of the radiated sound is concentrated at the listening position. The system further includes a signal processing block operatively connected upstream of the loudspeaker arrangement, wherein the signal processing module block includes a multiple-input multiple-output system and is configured to process at least one input signal and to provide the multiplicity of loudspeaker drive signals. The loudspeaker arrangement includes at least one line array of loudspeakers, and the at least one line array of loudspeakers includes at least three two loudspeakers with centers disposed in a line and distributed along the line according to a non-linear center to center distance distribution scheme.

**EP 3 425 925 A1**

EP 3 425 925 A1

**Description**

BACKGROUND

**1. Technical Field**

The disclosure relates to a system and method (generally referred to as a "system") for processing audio signals.

**2. Related Art**

Using simultaneously various sound sources in a room such as a vehicle cabin can make for a chaotic mix of acoustic experiences: personal tablets playing movies in one place, phone calls in another, and navigation prompts interrupting music that is currently played by an audio system all over the room. Spatially limited and acoustically separated regions inside the room may allow for reproducing different sound material simultaneously without interfering with each other. This is desired to be obtained without the use of physical separation or the use of headphones. Individual sound zones (ISZ) is an integrated audio entertainment concept that gives every passenger the freedom to choose his or her own audio entertainment while maintaining a harmonious in-cabin experience for everybody. An individual sound zone is an area in which a particular sound is distributed by way of multiple sound sources, e.g., arrays of loudspeakers, with adequate preprocessing of the audio signals to be reproduced so that different audio content is reproduced in predefined zones without interfering content from others. Individual sound zones can be implemented by adjusting the audio response of the multiple sound sources to approximate a desired sound field in a desired area. A variety of effects occurring in connection with sound field control may deteriorate the separation between and the sound quality within sound zones.

SUMMARY

A loudspeaker-room system that is configured to establish a sound zone includes a room encompassing a listening position, and a loudspeaker arrangement disposed in the room in the vicinity of the listening position, the loudspeaker arrangement being configured to receive a multiplicity of electrical loudspeaker drive signals and to convert them into sound radiated to the listening position so that a maximum sound energy of the radiated sound is concentrated at the listening position. The system further includes a signal processing block operatively connected upstream of the loudspeaker arrangement, wherein the signal processing module block includes a multiple-input multiple-output system and is configured to process at least one input signal and to provide the multiplicity of loudspeaker drive signals. The loudspeaker arrangement includes at least one line array of loudspeakers, and the at least one line array of loudspeakers includes at least three loudspeakers with centers disposed in a line and distributed along the line according to a non-linear center to center distance distribution scheme.

A method that is configured to establish a sound zone in a room encompassing a listening position includes converting, with a loudspeaker arrangement disposed in the vicinity of the listening position, a multiplicity of electrical loudspeaker drive signals into sound radiated to the listening position so that a maximum sound energy of the radiated sound is concentrated at the listening position. The method further includes processing, with a signal processing arrangement upstream of the loudspeaker arrangement, at least one input signal and providing the electrical loudspeaker drive signals, wherein the signal processing arrangement includes a multiple-input multiple-output system. The loudspeaker arrangement includes at least one line array of loudspeakers, and the at least one line array of loudspeakers includes at least three loudspeakers with centers disposed in a line and distributed along the line according to a non-linear center to center distance distribution scheme.

Other systems, methods, features and advantages will be, or will become, apparent to one with skill in the art upon examination of the following detailed description and appended figures. It is intended that all such additional systems, methods, features and advantages be included within this description, be within the scope of the invention, and be protected by the following claims.

BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a top view of a car cabin with two individual sound zones.

Figure 2 is a schematic diagram illustrating a 2x2 transaural stereo system.

Figure 3 is a flow chart illustrating the signal flow of a basic acoustic Multiple-Input Multiple-Output (MIMO) system with M recording channels and K output channels, utilizing a multiple error least mean square (MELMS) system or method.

Figure 4 is a flowchart illustrating a $1 \times 2 \times 2$ MELMS system or method applicable in the MIMO system shown in Figure 3.

Figure 5 is a schematic diagram illustrating exemplary positions of four line arrays of loudspeakers disposed in the roof liner in the interior of a vehicle.

Figure 6 is a schematic diagram illustrating an exemplary symmetric non-linear line array of loudspeakers with pairs of loudspeakers logarithmically/exponentially spaced from a center point.

Figure 7 is a schematic diagram illustrating an exemplary non-symmetric non-linear line array of loudspeakers with loudspeakers logarithmically/exponentially spaced from one end of the array to the other end.

Figure 8 is a schematic diagram illustrating an exemplary position of a cross array of loudspeakers in the roof liner in the interior of a vehicle.

Figure 9 is a schematic diagram illustrating an exemplary cross array including two line arrays of loudspeakers with each pairs of loudspeakers logarithmically spaced from a respective center point.

Figure 10 is a schematic diagram illustrating an exemplary cross array including two line arrays of loudspeakers, one of which being a linear array and the other being a non-linear line array identical or similar to the one shown in Figure 7.

Figure 11 is a schematic diagram illustrating an exemplary cross array including two line arrays of loudspeakers, both of which being a non-linear line array identical or similar to the one shown in Figure 7.

Figure 12 is a schematic diagram illustrating an exemplary position of a circular line array of loudspeakers in the center of the interior of a vehicle.

Figure 13 is a perspective view of a two-dimensional circular line array based on a logarithmic spiral.

Figure 14 is a top view of a two-dimensional circular line array based on a Fermat's spiral.

Figure 15 is perspective view of a three-dimensional circular line array based on a conic helix.

DETAILED DESCRIPTION

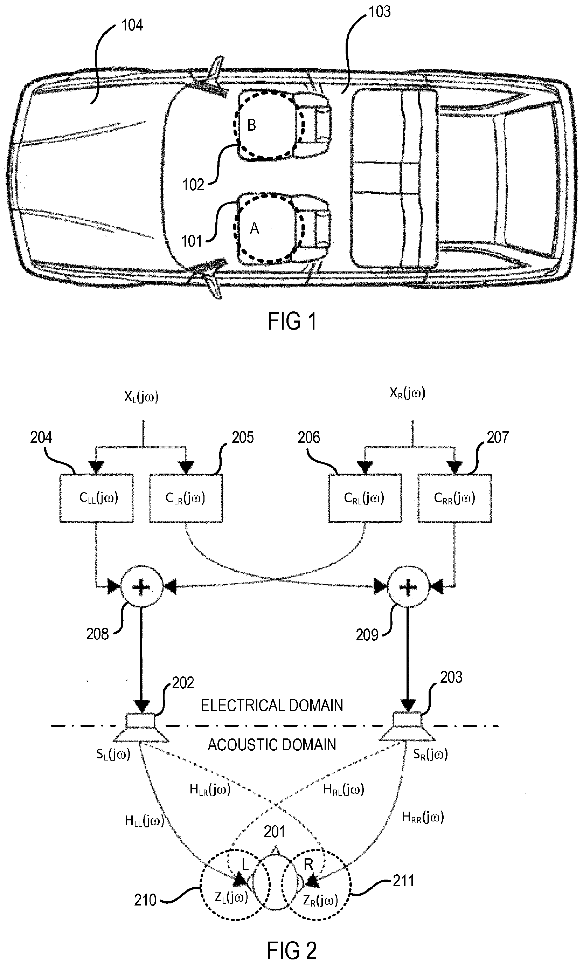

Figure 1 depicts an exemplary arrangement of two individual sound zones 101, 102 (referred to also as "sound zones") in a room, e.g., a cabin 103 of a vehicle, e.g., a car 104. An audio content A may be distributed in zone 101 and an audio content B may be distributed in zone 102. The spatial orientation of the two zones may not be fixed and may adapt to a listener location (also referred to as "listening position") to ideally be able to track the exact position in order to reproduce the desired sound program in the spatial region around the listener. However, a complete separation of sound fields found in each of the two zones 101 and 102 is not a realizable condition for a practical system implemented under reverberant conditions and containing finite impedance boundaries. Thus, it is to be expected that the listeners will be subjected to a certain degree of annoyance that is created by adjacent reproduced sound fields. However, a practical implementation of sound zones should also allow for the reproduction of arbitrary sound programs within the individual sound zones simultaneously, the creation of quiet zones, the reproduction of the full audible spectrum (e.g., 20-20.0000 Hz), the adaptation of zone orientation to user location in the room, and for precisely defined spatial regions for each zone.

Figure 2 illustrates another exemplary arrangement of two individual sound zones. This arrangement includes a two-zone transaural stereo system, i.e., a 2x2 system in which the acoustic output signals are binaural (stereo) and are picked up by the two ears of a listener 201 or, alternatively, by two microphones (not shown) arranged on an artificial head (not shown) at ear positions, for example. Two individual sound zones are established around the ears of the listener 201 based on the electrical input (stereo) audio signals $X_L(j\omega)$, $X_R(j\omega)$ by way of two loudspeakers 202 and 203 in connection with an inverse filter matrix implemented with four inverse filters 204-207 that have transfer functions $C_{LL}(j\omega)$, $C_{LR}(j\omega)$, $C_{RL}(j\omega)$ and $C_{RR}(j\omega)$ and that are connected upstream of the two loudspeakers 202 and 203.

The signals and transfer functions are in the frequency domain and correspond with time domain signals. The left electrical input (audio) signal $X_L(j\omega)$ and the right electrical input (audio) signal $X_R(j\omega)$, which may be provided by any suitable audio signal source, such as a radio receiver, music player, smartphone, navigation system or the like, are pre-filtered by the inverse filters 204-207. Filters 204 and 205 filter the input signal $X_L(j\omega)$ with transfer functions $C_{LL}(j\omega)$ and $C_{LR}(j\omega)$, and filters 206 and 207 filter the input signal $X_R(j\omega)$ with transfer functions $C_{RL}(j\omega)$ and $C_{RR}(j\omega)$ to provide inverse-filter output signals.

The inverse-filter output signals provided by filters 204 and 206 are combined by an adder 208, and inverse filter output signals provided by filters 205 and 207 are combined (e.g., added) by an adder 209 to form combined signals $S_L(j\omega)$ and $SR(j\omega)$. In particular, signal $S_L(j\omega)$ supplied to the left loudspeaker 202 can be expressed as:

$$S_L(j\omega) = C_{LL}(j\omega) \cdot X_L(j\omega) + C_{RL}(j\omega) \cdot X_R(j\omega), \tag{1}$$

and the signal $S_R(j\omega)$ supplied to the right loudspeaker 203 can be expressed as:

$$S_R(j\omega) = C_{LR}(j\omega) \cdot X_L(j\omega) + C_{RR}(j\omega) \cdot X_R(j\omega). \tag{2}$$

Loudspeakers 202 and 203 transform the (electrical) combined signals $S_L(j\omega)$ and $S_R(j\omega)$ into sound (acoustic) signals that are transferred to and received by the left and right ear of the listener 201, respectively. The sound signals actually present at the left and right ears of the listener 201 are denoted as $Z_L(j\omega)$ and $Z_R(j\omega)$, respectively, in which:

$$Z_L(j\omega) = H_{LL}(j\omega) \cdot S_L(j\omega) + H_{RL}(j\omega) \cdot S_R(j\omega), \tag{3}$$

$$Z_R(j\omega) = H_{LR}(j\omega) \cdot S_L(j\omega) + H_{RR}(j\omega) \cdot S_R(j\omega). \tag{4}$$

In equations 3 and 4, the transfer functions $Hij(j\omega)$ denote the room impulse response (RIR) in the frequency domain, i.e., the transfer functions from loudspeakers 202 and 203 to the left and right ear of the listener 201, respectively. Indices i and j refer to the left and right loudspeakers (index "i") and the left and right ears (index "j"), i and j may be each "L" or "R".

The above equations 1-4 may be rewritten in matrix form, wherein equations 1 and 2 may be combined into:

$$S(j\omega) = C(j\omega) \cdot X(j\omega), \tag{5}$$

and equations 3 and 4 may be combined into:

$$Z(j\omega) = H(j\omega) \cdot S(j\omega), \text{ wherein} \tag{6}$$

$X(j\omega)$ is a vector composed of the electrical input signals, i.e., $X(j\omega) = [X_L(j\omega), X_L(j\omega)]^T$, $S(j\omega)$ is a vector composed of the loudspeaker signals, i.e., $S(j\omega) = [S_L(j\omega), S_L(j\omega)]^T$,

$C(j\omega)$ is a matrix representing the four filter transfer functions $C_{LL}(j\omega)$, $CRL(j\omega)$, $CLR(j\omega)$ and $CRR(j\omega)$, and $H(j\omega)$ is a matrix representing the four room impulse responses in the frequency domain $H_{LL}(j\omega)$, $H_{RL}(j\omega)$, $H_{LR}(j\omega)$ and $H_{RR}(j\omega)$. Combining equations 5 and 6 yields:

$$Z(j\omega) = H(j\omega) \cdot C(j\omega) \cdot X(j\omega). \tag{7}$$

From the above equation 7, it can be seen that:

$$C(j\omega) = H^{-1}(j\omega) \cdot e\text{-}j\omega\tau, \tag{8}$$

i.e., the filter matrix C(jω) is equal to the inverse of the matrix H(jω) of room impulse responses $H^{-1}(jω)$ in the frequency domain plus an additionally delay τ (compensating at least for the acoustic delays), then the signal $Z_L(jω)$ arriving at the left ear of the listener is equal to the left input signal $X_L(jω)$ and the signal $Z_R(jω)$ arriving at the right ear of the listener is equal to the right input signal $X_R(jω)$, wherein the signals $Z_L(jω)$ and $Z_R(jω)$ are delayed as compared to the input signals $X_L(jω)$ and $X_R(jω)$, respectively. That is:

$$Z(j\omega) = X(j\omega) \bullet e^{-j\omega\tau}. \tag{9}$$

As can be seen from equation 7, designing a transaural stereo reproduction system includes - theoretically - inverting the transfer function matrix H(jω), which represents the room impulse responses in the frequency domain, i.e., the RIR matrix in the frequency domain. For example, the inverse may be determined as follows:

$$C(j\omega) = \det(H)^{-1} \bullet \text{adj}(H(j\omega)), \tag{10}$$

which is a consequence of Cramer's rule applied to equation 8 (the delay is neglected in equation 10). The expression adj(H(jω)) represents the adjugate matrix of matrix H(jω). One can see that the pre-filtering may be done in two stages, wherein the filter transfer function adj(H (jω)) ensures a damping of the crosstalk and the filter transfer function det(H)$^{-1}$ compensates for the linear distortions caused by the transfer function adj(H(jω)). The adjugate matrix adj(H (jω)) results in a causal filter transfer function, whereas the compensation filter has a transfer function G(jω) = det(H)$^{-1}$.

In the example of Figure 2, the left ear (signal $Z_L$) may be regarded as being located in a first sound zone 210 and the right ear (signal $Z_R$) may be regarded as being located in a second sound zone 211. This system may provide a sufficient crosstalk damping so that, substantially, input signal $X_L$ is reproduced only in the first sound zone 210 (left ear) and input signal $X_R$ is reproduced only in the second sound zone 211 (right ear). As a sound zone is not necessarily associated with an ear of any listener, this concept may be generalized and extended to a multi-dimensional system with more than two sound zones, provided that the system comprises (at least) as many loudspeakers or groups of loudspeakers as individual sound zones.

The system shown in Figure 2 can be enhanced, particularly in view of the spatial separation of the sound zones 210 and 211 from each other, by using more directional loudspeakers 202 and 203 or using arrays of loudspeakers in connection with beamformer systems that allow for creating a sound beam with controllable shape and direction. Applicable beamformer systems may include (windowed) delay-and-sum, minimum variance distortionless response (MVDR) or MIMO concepts. For example, MIMO systems are able to model multiple linear shift-invariant (LSI) systems with inherently time-varying impulse responses if the system to be modelled changes slowly compared to the length of the system impulse responses so that time can be divided into periods in which an acoustic channel can be assumed to be stationary and can be modeled, e.g., with a finite impulse response (FIR) filter.

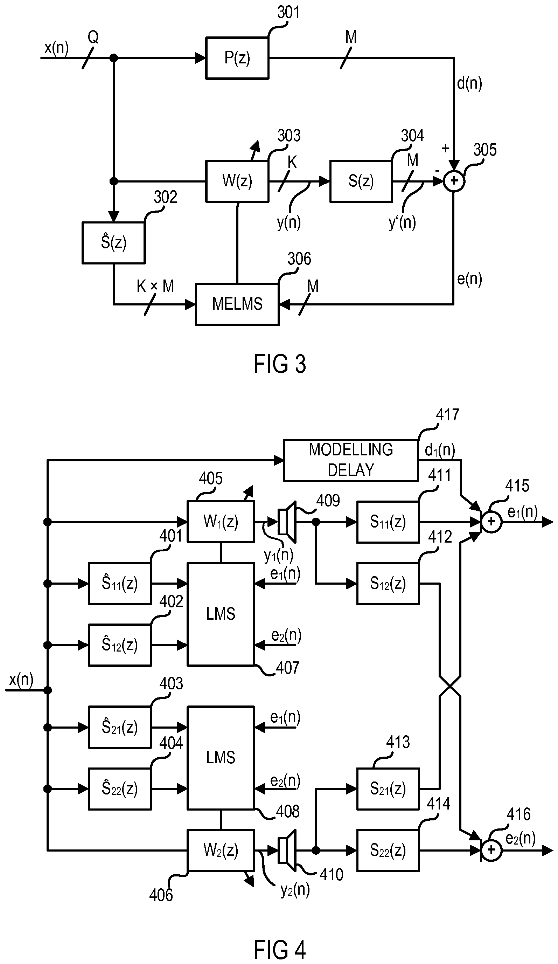

Figure 3 is a flow chart illustrating the signal flow of a basic multiple-input multiple-output system with K output paths providing K output channels for supplying K output signals y(n) to K groups of loudspeakers (not shown), Q input paths providing Q input channels for receiving Q input signals x(n), and M recording paths (recording channels) providing M recording channels for receiving M error signals e(n) from M groups of microphones (represented by a subtractor block 305). K, M and Q are integers, in which K ≥ 1, M ≥ 1, and Q ≥ 1. A group of loudspeakers is assumed to include one or more loudspeakers that are connected to a single output path, and a group of microphones is assumed to include one or more microphones that are connected to a single recording path. It is further assumed that the underlying MIMO system includes a room (e.g., a loudspeaker-room-microphone system, i.e., a room in which at least one loudspeaker and at least one microphone is arranged) and is linear and time-invariant (for a certain period of time) so that the MIMO system can be described by its room acoustic impulse responses.

A block is understood to be a hardware system or an element thereof with at least one of: a processing unit executing software and a dedicated circuit structure, in order to implement a respectively desired signal transferring or processing function. Paths may include at least one of: an electrical path that conducts electrical signals (e.g., wires, analog and/or digital circuitry), an acoustical path that conducts acoustic signals (sound), and transducers for transforming electrical signals into acoustic signals and vice versa. Further, a filter matrix of a filter block is a matrix of transfer functions occurring between the inputs and the outputs of that block. Further, the underlying MIMO system may employ software executed by a processing unit to implement a multiple error least mean square (MELMS) algorithm for equalization, or any other adaptive control algorithm such as a (modified) least mean square (LMS), recursive least square (RLS), etc.

The MELMS algorithm is an iterative algorithm to obtain the optimum least mean square (LMS) solution. The adaptive approach of the MELMS algorithm allows for an in-situ design of filters and also enables a convenient method to readjust the filters whenever a change occurs in the (electrical and/or acoustic) transfer functions. The MELMS algorithm employs the steepest descent approach to search for the minimum of the performance index. This is achieved by successively updating filter coefficients by an amount proportional to the negative of gradient $\underline{\nabla}(n)$, according to which $\underline{w}(n + 1) = \underline{w}(n) + \mu (-\underline{\nabla}(n))$, where $\mu$ is the step size that controls the convergence speed and the final misadjustment. For approximation purposes, the vector $\underline{w}$ may be updated based on the instantaneous value of the gradient $\underline{\nabla}(n)$ instead of its expected value.

The Q input signals x(n) are filtered with a primary path filter matrix P(z) which describes the behavior of a primary path block 301 representing acoustic primary paths from the Q input paths to the M groups of microphones. Thereby, the primary path block 301 provides M desired signals d(n) to the M groups of microphones 305. Based on the MELMS algorithm, MELMS processing block 306 controls an equalizing filter matrix W(z) implemented in an equalizing filter block 303 to filter the Q input signals x(n) such that the resulting K output signals y(n), when filtered in a secondary path block 304 with a secondary path filter matrix S(z), match the desired signals d(n). The MELMS processing block 306 and, thus, the MELMS algorithm is supplied with $K \times M$ filtered input signals, i.e., the input signals x(n), after being filtered with a secondary pass filter matrix $\hat{S}(z)$ implemented in a filter block 302, and M error signals e(n) provided by subtractor block 305 which subtracts M microphone signals y'(n), i.e., the K output signals y(n) filtered with secondary path filter matrix S(z), from the M desired signals d(n). The MIMO system shown in Figure 3 allows for adapting the behavior of an actual room, e.g., a car cabin, to the behavior of a target room, e.g., a real or virtual (simulated) reference room.

Figure 4 is a signal flow chart illustrating the signal flow of an exemplary $Q \times K \times M$ MELMS system based on the system shown in Figure 3, wherein Q is 1, K is 2 and M is 2 and which is adjusted to create a bright zone at a microphone 415 and a dark zone at a microphone 416. A "bright zone" represents an area where a sound field is present in contrast to a "dark zone" where almost silence occurs. Input signal x(n) is supplied to four pre-filter blocks 401 - 404, which implement a $2 \times 2$ secondary path filter matrix with transfer functions $\hat{S}_{11}(z)$, $\hat{S}_{12}(z)$, $\hat{S}_{21}(z)$ and $\hat{S}_{22}(z)$, and to two equalizing filter blocks 405 and 406 with transfer functions $W_1(z)$ and $W_2(z)$ which implement an equalizing filter matrix. Filter blocks 405 and 406 are controlled by least mean square (LMS) blocks 407 and 408.

The LMS block 407 receives signals from pre-filter blocks 401 and 402, and error signals $e_1(n)$ and $e_2(n)$ from the microphones 415 and 416. The LMS block 408 receives signals from the pre-filter blocks 403 and 404 and the error signals $e_1(n)$ and $e_2(n)$ from the microphones 415 and 416. The equalizing filter blocks 405 and 406 provide the output signals $y_1(n)$ and $y_2(n)$ for the loudspeakers 409 and 410. The output signal $y_1(n)$ is radiated by the loudspeaker 409 via secondary paths 411 and 412 to the microphones 415 and 416, respectively. The output signal $y_2(n)$ is radiated by the loudspeaker 410 via the secondary paths 413 and 414 to the microphones 415 and 416, respectively. The microphone 415 generates the error signals $e_1(n)$ and $e_2(n)$ from the output signals $y_1(n)$, $y_2(n)$ and the desired signal $d_1(n)$. The pre-filter blocks 401 - 404 model by way of their transfer functions $\hat{S}_{11}(z)$, $\hat{S}_{12}(z)$, $\hat{S}_{21}(z)$ and $\hat{S}_{22}(z)$ the secondary paths 411-414 having the transfer functions $\hat{S}_{11}(z)$, $\hat{S}_{12}(z)$, $\hat{S}_{21}(z)$ and $\hat{S}_{22}(z)$.

Furthermore, a modeling delay block 417, which implements a modelling delay whose phase delay is linear over frequency, may supply electrically (not shown) or acoustically (shown) a desired signal $d_1(n)$ to microphone 415. The desired signal $d_1(n)$ is the delayed input signal x(n) and is added to the summed signals picked up at the end of the secondary paths 411 and 413 at microphone 415. This allows for the creation of a bright zone there, whereas a desired signal such as or similar to the desired signal $d_1(n)$ is missing in the case of the generation of error signal $e_2(n)$, hence allowing for the creation of a dark zone at microphone 416.

Referring again to the car cabin 103 shown in Figure 1, where the two sound zones 101 and 102 are associated with the front seats of the car 104. Sound zone 101 is associated with the driver's seat and sound zone 102 is associated with the front passenger's seat. When using four loudspeakers for two binaural listeners, four zones may be established at the front seats and equations 7-10 still apply but yield a fourth-order system instead of a second-order system, as in the example of Figure 2, wherein the inverse filter matrix $C(j\omega)$ and the room transfer function matrix $H(j\omega)$ are then a 4x4 matrix.

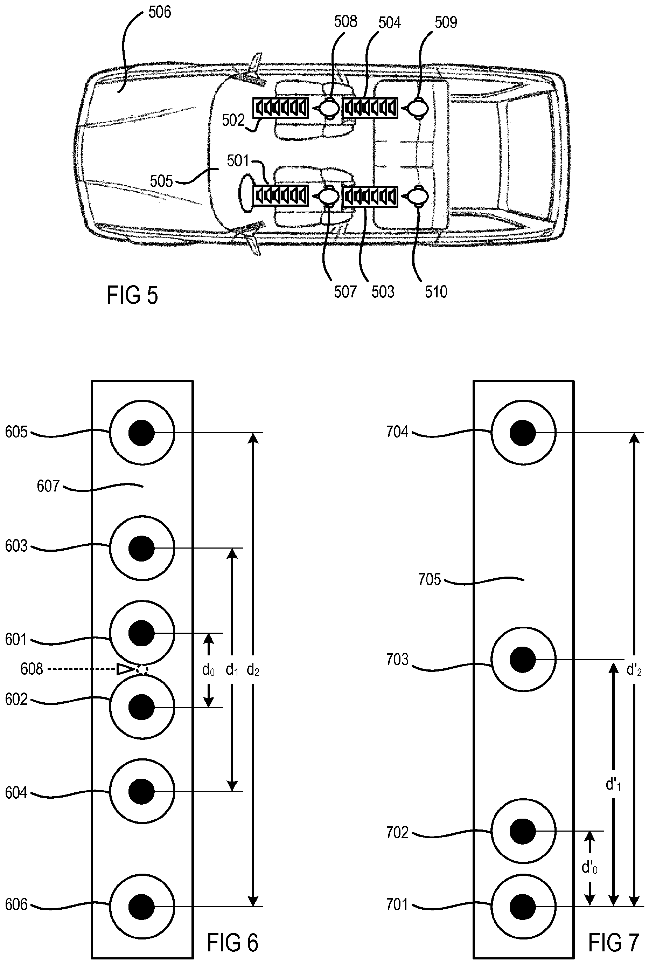

Referring to Figure 5, four (e.g., four monaural) or eight (e.g., four binaural) individual sound zones (not shown) may be generated with a multiplicity of (small) omnidirectional loudspeakers (e.g. loudspeakers commonly used in smartphones and tablet computers) which are disposed in four lines to form four line arrays 501 - 504 of loudspeakers. The multiplicity of omnidirectional loudspeakers of each line array 501 - 504 may be arranged sequentially as a line of multiple, equal strength dipole pairs, each pair centered about an acoustic axis of the respective line array 501 - 504 and spaced a different distance apart such that one or more cardioid (end-fire) beam patterns are formed independently by each successive dipole pair over preselected contiguous acoustic frequency bands. Exemplary alternative loudspeaker line arrays are described in more detail below in connection with Figures 6-10.

In the arrangement shown in Figure 5, each of the line arrays 501 - 504 may be disposed in a roof liner (not shown) of a cabin 505 of a vehicle, e.g., a car 506, or in any other position in front of one of four passenger positions 507 - 510. The loudspeakers of each line array 501-504 are arranged such that their end-fire beam patterns are directed to a corresponding one of the passenger positions 507 - 510. Each of the line arrays 501 - 504 may be mounted in a rigid, sealed box and the loudspeakers of each array may be connected to a signal processing circuit which may implement a MIMO beamformer to provide a beamforming functionality. The beamforming functionality may be adjusted to provide maximum sound pressure at the passenger position closest to the particular array (bright zone) and minimum sound pressure at the other passenger positions (dark zones).

The line arrays 501 - 504 discussed above in connection with Figure 5 may be constructed as shown in Figure 6. Typically a direct radiating loudspeaker in a speaker enclosure faces an intended audience and, ideally, the soundwaves from this loudspeaker emanate in the direction of the intended listener or listeners, i.e., have a high directivity towards the audience. Directivity denotes the directional characteristic of the soundwaves and indicates the sound energy that is directed toward a specific area compared to all of the sound energy being generated by that loudspeaker. Loudspeakers with a high directivity, i.e., propagating in a particular direction and essentially not in other directions, can be heard clearer by the intended audience. In a reverberant space, loudspeakers with low directionality, i.e., propagating into all directions, only contribute to the reverberant field. The conventional loudspeaker takes a "shotgun" approach, scattering sound in an uncalculated manner across the room. High frequency sound reverberates off the floors and ceilings, resulting in an imperfect sound. However, low frequency sounds, such as bass, are omni-directional. Omni-directional sounds disperse in every direction.

A line array of equally spaced similar or identical loudspeakers (loudspeakers that have the same or similar transfer functions) along a line may exhibit a narrower radiation pattern or beamwidth, in a plane containing the line and normal to the baffle in which the loudspeakers are mounted, than a single loudspeaker. The higher-frequency sounds emanating from a loudspeaker consists of a main lobe and side lobes. Beamwidth is measured as the included angle of one-quarter power (-6 dB) points of the main lobe projection. A smaller beamwidth angle is directly proportional to a higher directivity. Without corrective filtering, the beamwidth of a line array becomes increasingly narrow with increasing frequency. The frequency at which the narrowing of the beamwidth begins to occur is a function of the length of the line array.

The symmetric non-linear loudspeaker array shown in Figure 6 provides a more uniform pattern of sound emanating from loudspeakers. The emanating sound is more controlled vertically, up and down; but not horizontally, to the sides. As a result, the sound is cast directly to the listener. The exemplary loudspeaker array shown in Figure 6 includes a plurality of (identical or similar) conventional loudspeakers, arranged in pairs and symmetrically spaced about a central point on a line. For example, the loudspeaker array shown in Figure 6 includes six individual loudspeakers 601 - 606 (arranged in three pairs of loudspeakers 601 and 602, 603 and 604, 605 and 606) on a baffle 607. Optionally, a single loudspeaker (not shown) may be located at a central point 608 of the array with, however, all other drivers being present in pairs.

The loudspeakers 601 - 606 are spaced longitudinally about the center point 608. The innermost pair of drivers 601, 602 are spaced equidistant from center point 608 by a distance of $d_0/2$, where $d_0$ is measured from center points of the innermost loudspeakers 601, 602. The spacing between the innermost pair of loudspeakers, $d_0$, determines the uppermost frequency at which the array will function as expected, known as spatial aliasing frequency, without the effects of comb filtering as one moves off-axis, i.e., reducing high amplitude side lobes. A main lobe is the directivity pattern of a loudspeaker exhibiting the highest sound pressure. This frequency, f, may be determined as:

$$f = c/2 \cdot d_0, \tag{11}$$

where c is the speed of sound. Subsequent pairs of drivers should be spaced along the line according to the equation:

$$d_n = 4 \cdot n \cdot d_0, \tag{12}$$

where n=1, 2, 3, etc, such that n = 0 at the innermost pair of drivers 601, 602 and n increases by 1 with each pair of loudspeakers sequentially added along the (line) array. Accordingly, the next most innermost loudspeakers 603, 604 have a center to center distance of $d_1$, where n = 1 and $d_1 = 4 \cdot d_0$. Accordingly, the next set of loudspeakers 605, 606 have a center to center spacing of $d_2$, where n = 2 and $d_2 = 8 \cdot d_0$. The exemplary loudspeaker array has six loudspeakers, although any number of loudspeakers may be applicable.

In the exemplary array shown in Figure 6, the distance between the loudspeakers and the center point increases, starting at the center point, according to a non-linear scale, e.g. a logarithmic or exponential scale as shown. However, any other non-linear scale, e.g., any other logarithmic or exponential scale, such as a scale of prime numbers (1, 3, 5, 7, 11 ...), a root scale (1, 1.41, 1.73, 2 ...), a dual logarithmic or exponential scale (1, 2, 4, 8 ...) or quadratic scale (1, 4, 9, 16 ...) may form the basis. Applying at least one of frequency filtering and beamforming may further increase directionality without reverberation from floors and ceilings.

In practice, the loudspeakers have a definitive physical size. This physical size determines the minimal possible spacing between the loudspeakers. Those loudspeakers which have to be placed a distance apart which is smaller than the physical size permits are, in practice, placed in contact with one another. This may lead to concessions with regard to the maximum reachable spatial aliasing frequency range concerned. Naturally, the concessions made with regard to the maximum reachable upper frequency will be as small as possible if the sizes of the loudspeakers are chosen to be as small as possible. However, smaller loudspeakers usually have poorer characteristics with regard to power and efficiency. Therefore, in practice, a compromise will have to be made between the quality of the loudspeakers and the concessions made in respect of the resolution.

Figure 7 shows an exemplary non-symmetric non-linear line array of loudspeakers with loudspeakers logarithmically spaced from one end of the array to the other end. The loudspeaker array shown in Figure 7 is alternative to the array described above in connection with Figure 6 and includes a plurality of (identical or similar) conventional loudspeakers, e.g., four individual loudspeakers 701 - 704, arranged logarithmically on a baffle 705. For example, a loudspeaker 701 may be disposed at one end of the baffle 705. The other loudspeakers 702 - 704 are spaced longitudinally about the loudspeaker 701. The loudspeakers disposed closest to each other, loudspeakers 701 and 702, are spaced from the loudspeaker 701 by a distance of d'o, where $d'_0$ is measured from center points of the loudspeakers 701 and 702. The spacing between the loudspeakers 701 and 702, distance d'o, determines the uppermost frequency at which the array will function as expected, due to spatial aliasing, without the effects of comb filtering as one moves off-axis, i.e., reducing high amplitude side lobes.

The loudspeaker 703 next closest to loudspeaker 701 is disposed at a center to center distance of $d'_1$. The loudspeaker 704 which is disposed farthest from loudspeaker 701, e.g., at the other end of the baffle 705, has a center to center spacing of $d'_2$. The exemplary loudspeaker array has four loudspeakers, although any number of loudspeakers may be applicable. In the exemplary array shown in Figure 7, the distance between the loudspeakers 702 to 704 and the loudspeaker 701 increases, starting at the loudspeaker 701, according to a non-linear scale, e.g. a logarithmic or exponential scale as shown. However, any other non-linear scale, e.g., any other logarithmic or exponential scale such as a scale of prime numbers (1, 3, 5, 7, 11 ...), a root scale (1, 1.41, 1.73, 2 ...), a dual logarithmic or exponential scale (1, 2, 4, 8 ...) or quadratic scale (1, 4, 9, 16 ...) may form basis. Applying at least one of frequency filtering and beamforming may further increase directionality.

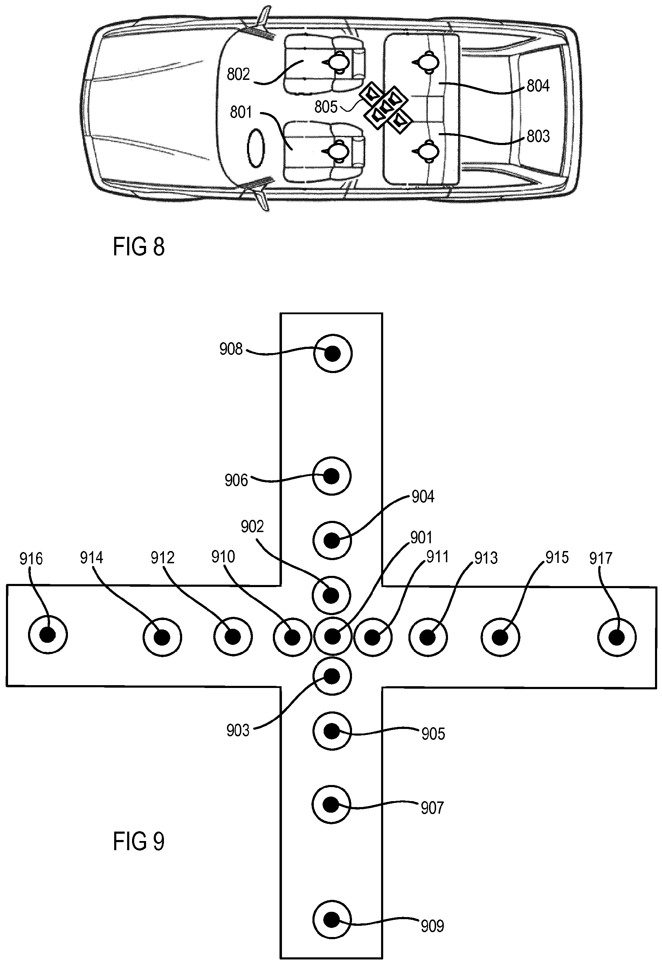

In another exemplary arrangement, which is shown in Figure 8, only one loudspeaker array, cross array 805, is used which is disposed at a central position in the (headliner of the) cabin and is able to radiate sound to four passenger positions 801 - 804 (i.e., listening positions). In the cross array 805, loudspeakers are arranged in a cross-like pattern, e.g., two line arrays disposed perpendicular or under any other angle with each other, with non-linear spacing between the loudspeakers and, optionally, a loudspeaker at a common center point of the line arrays. At the center point a single loudspeaker may be disposed or not, as the case may be. The cross array 805 is disposed to produce, maybe in connection with appropriate signal processing (not shown in Figure 8), sound beams directed to each of the four passenger positions 801 - 804. The sound beams provide different information, i.e. the signals intended to be perceived by the respective passenger, to the different listening positions 801 - 804.

As already noted, the two line areas of the cross array need not be arranged perpendicular to each other. Instead, the line arrays of the cross array may be arranged so that a line array is directed in an end-fire orientation toward each one of the desired listening positions. For example, two line arrays with equidistant or non-equidistant distribution of the loudspeakers are aligned crosswise and along each diagonal between four listening positions such as between the front left and rear right sitting positions, and the front right and rear left sitting position in a car.

Figure 9 shows an exemplary cross array which is applicable as cross array 805 in the arrangement shown in Figure 8, and which includes an arrangement of loudspeakers in the form of a cross and, e.g., perpendicular to each other. The cross array shown in Figure 9 includes two (or more) loudspeaker line arrays, (at least one of) which may be similar to that shown in Figure 6 which are arranged perpendicular (or under any other angle) to one another with a coincident central loudspeaker 901. Again, the loudspeakers in the two (or optionally more) line arrays are arranged in accordance with a non-linear distribution, for example as defined above. One of the two line arrays (e.g., the vertically arranged line array in Figure 9) includes eight (identical) conventional loudspeakers 902 - 909, arranged in four pairs of loudspeakers (902 and 903, 904 and 905, 906 and 907, 908 and 909), and symmetrically spaced about a central point at which central loudspeaker 801 is arranged. The other one of the two line arrays (e.g., the horizontally arranged line array in Figure 9) includes also eight (identical) conventional loudspeakers 910 - 917, arranged in four pairs of loudspeakers 910 and 911, 912 and 913, 914 and 915, 916 and 917, and symmetrically spaced about the central point at which central loudspeaker 901 is arranged.

The innermost four drivers 902, 903, 910 and 911 are spaced in four perpendicular directions equidistant from the center point at which central loudspeaker 901 is arranged. The outermost four drivers 908, 909, 916 and 917 are spaced in four perpendicular directions equidistant and at an utmost distance from the center point at which central loudspeaker 901 is arranged. In the exemplary array shown in Figure 9, the distance between the loudspeakers and the center point increases along the line arrays, starting at the center point, according to a non-linear scale.

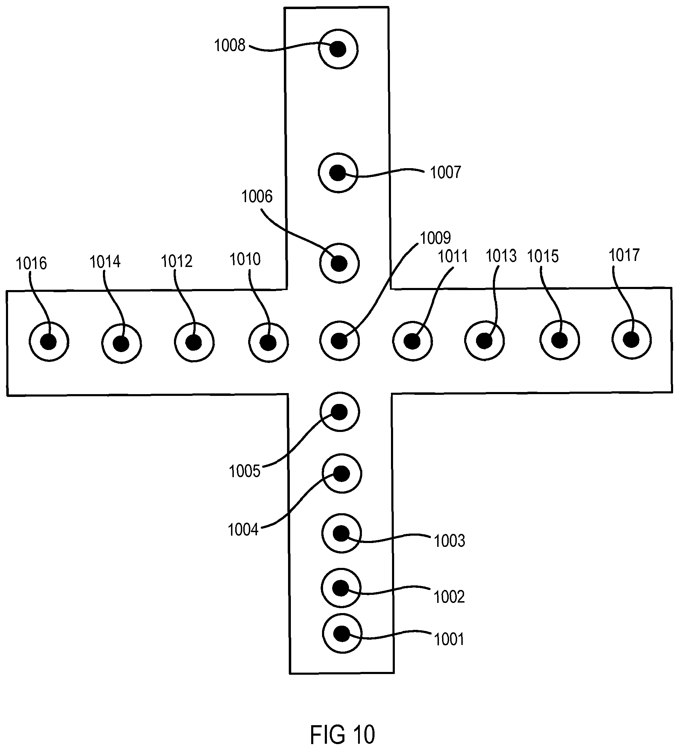

Figure 10 shows another exemplary cross array which is also applicable as cross array 805 in the arrangement shown in Figure 8, and which includes two (or more) loudspeaker line arrays arranged in the form of a cross. In the present example, one of the two line arrays is a linear array and the other is a non-linear line array identical or similar to that shown in Figure 7. The (at least) two line arrays are arranged perpendicular to one another or under any other angle with a coincident central loudspeaker 1009 which is arranged at a central point of both line arrays. One of the two line arrays (e.g., the vertically arranged line array in Figure 10) is the non-linear line array and includes eight (identical) loudspeakers 1001 - 1008 that are arranged according to a non-liner distribution scheme. The other line array, e.g., the horizontally arranged line array in Figure 10, is the linear line array and includes eight (identical) loudspeakers 1010 - 1017 that are arranged according to a linear distribution scheme, i.e., that are equally spaced from neighboring loudspeakers. Alternatively, the other line array (e.g., the horizontally arranged line array in Figure 10) may be also a non-linear array such as the arrays described above in connection with Figures 6 and 7.

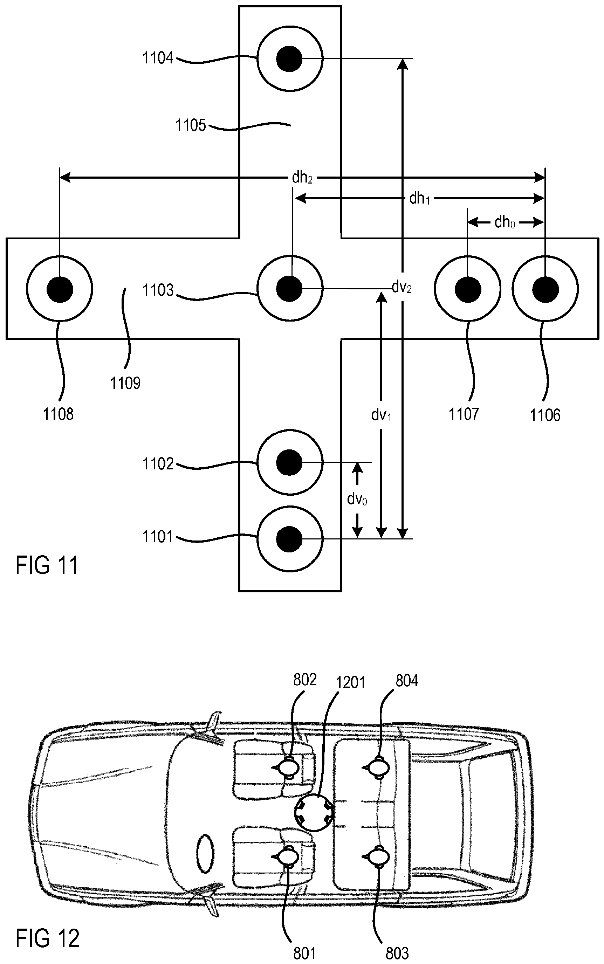

Figure 11 is a schematic diagram illustrating an exemplary cross array including two line arrays of loudspeakers, both of which being a non-linear line array identical or similar to the one shown in Figure 7. The cross array shown in Figure 11 includes in a vertical line of loudspeakers 1101 - 1104 which are arranged logarithmically on a baffle 1105 and which correspond with loudspeakers 701 - 704 on baffle 705 shown in Figure 7. The cross array further includes a horizontal line of loudspeakers 1106, 1107, 1103 and 1108 which are arranged logarithmically on a baffle 1109 and which also correspond with loudspeakers 701 - 704 on baffle 705 shown in Figure 7. As can be seen, loudspeaker 1103 is the mutual center loudspeaker of both lines and, thus, the center speaker of the array.

The loudspeakers disposed closest to each other in the vertical line, i.e., loudspeakers 1101 and 1102, may be spaced from each other by a distance of dvo ($= d'_0$). The loudspeakers disposed closest to each other in the horizontal line, i.e., loudspeakers 1106 and 1107, are spaced from each other by a distance of $dh_0$ ($= dvo = d'_0$). The loudspeaker 1103 next closest to loudspeaker 1101 in the vertical line may be disposed at a vertical center to center distance of $dv_1$ ($= d'_1$) and next closest to loudspeaker 1106 in the horizontal line may be disposed at a horizontal center to center distance of $dh_1$ ($=dv_1= d'_1$). The loudspeaker 1104 which is disposed farthest from loudspeaker 1101 in the vertical line, e.g., at the other end of the baffle 1105, may have, relative to loudspeaker 1101, a center to center spacing of $dv_2$ ($= d'_2$). The loudspeaker 1108 which is disposed farthest from loudspeaker 1106 in the horizontal line, e.g., at the other end of the baffle 1109, may have, relative to loudspeaker 1106, a center to center spacing of $dh_2$ ($=dv_2= d'_2$). The exemplary loudspeaker array has seven loudspeakers, although any number of loudspeakers is applicable.

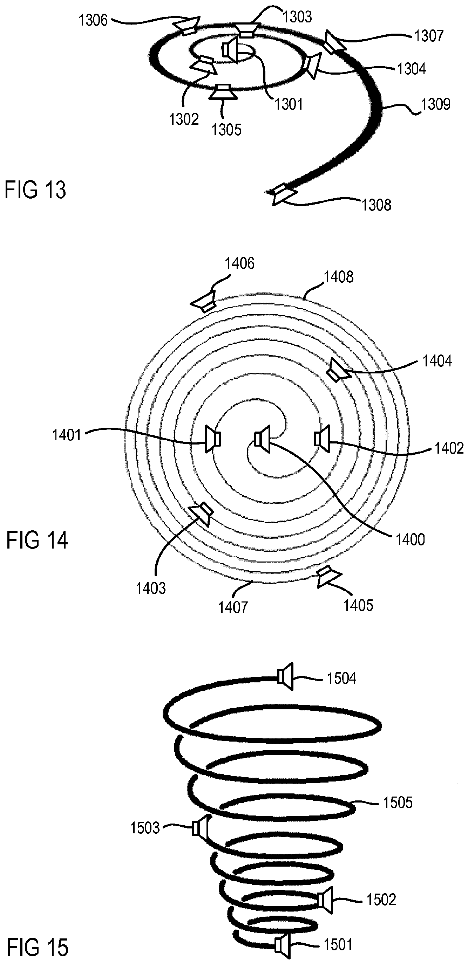

In an alternative arrangement shown in Figure 12, a curved non-linear line array 1201 substitutes the cross array described above in connection with Figure 8. Examples of curved non-linear line arrays applicable as curved non-linear line array 1201 instead of the circular, irregularly sampled two-dimensional array shown in Figure 12 are illustrated with respect to Figures 13 - 15, in which examples of a particular type of curved line arrays are shown, herein referred to as spiral or helix arrays. Furthermore, loudspeakers of these arrays are non-linearly distributed along a curved line, which means the spacing between the loudspeakers is not equal but according to a non-linear scheme.

A spiral is a curve which emanates from a point, moving farther away as it revolves around the point. A helix is a curve that turns around an axis at a constant or continuously varying distance while moving parallel to the axis. Helices include conical helices, and cylindrical helices, wherein commonly, the expression "spiral" is seldom applied if successive "loops" of a curve have the same diameter as in a cylindrical helix. Herein, curved line arrays based on curved lines in the form of two-dimensional spirals (i.e., spirals in a plane), three-dimensional spirals (i.e., conical helices) and helices including cylindrical helices and conical helices are subsumed under the expression "circular line array" which can be two-dimensional and three-dimensional.

Figure 13 is a perspective view of a two-dimensional circular line array where a multiplicity of loudspeakers 1301 - 1308 are arranged according to a non-linear distribution scheme on a planar logarithmic spiral 1309. The non-linear distribution scheme that is used in the array shown in Figure 13 is, for example, similar to the distribution scheme used in connection with the array shown in Figure 7, wherein loudspeaker 1301 in Figure 13 may correspond to loudspeaker 701 in Figure 7 and loudspeaker 1308 in Figure 13 may correspond to loudspeaker 704 in Figure 7 (however, with a different number of loudspeakers in between), and the (virtual) line along which loudspeakers 1301 - 1308 are disposed is curved to form the logarithmic spiral line. However, any other type of two-dimensional spiral such as a two-dimensional Archimedian spiral, hyperbolic spiral, lituus spiral, spiral of Theodorus, Fibonacci spiral etc. may form basis for the curved line.

Figure 14 is a top view of a two-dimensional circular line array where a multiplicity of loudspeakers 1401 - 1406 is arranged according to a non-linear distribution scheme on a planar Fermat type spiral 1407 with a central loudspeaker 1400 disposed in the center of the spiral. The non-linear distribution scheme that is used in the array shown in Figure 14 is, for example, similar to the distribution used in connection with the array shown in Figure 6 wherein loudspeaker 1401 and 1402 in Figure 14 may correspond to loudspeakers 601 and 602 in Figure 6 and loudspeakers 1305 and 1306 in Figure 14 may correspond to loudspeakers 605 and 606 in Figure 6. Two (virtual) sub-lines 1407 and 1408 which start at the spiral center and along which loudspeakers 1401 - 1406 are disposed are curved to form the Fermat's spiral.

Figure 15 is perspective view of a three-dimensional circular line array where a multiplicity of loudspeakers 1501 - 1504 are arranged according to a non-linear distribution on a conic helix 1505. The non-linear distribution that is used in the array shown in Figure 15 is, for example, similar to the distribution used in connection with the array shown in Figure 7, wherein loudspeaker 1501 in Figure 15 may correspond to loudspeaker 701 in Figure 7 and loudspeaker 1504 in Figure 14 may correspond to loudspeaker 704 in Figure 7, and the (virtual) line along which loudspeakers 1401 - 1404 are disposed is curved to form the conic helix. However, any other type of three-dimensional spiral or helix such as a three-dimensional Archimedian spiral, cat's eye nebula, sunflower spiral.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The described methods and associated actions may also be performed in various orders in addition to the order described in this application, in parallel, and/or simultaneously. The described systems are exemplary in nature, and may include additional elements and/or omit elements.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects.

While various embodiments of the invention have been described, it will be apparent to those of ordinary skilled in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof.

**Claims**

1. A loudspeaker-room system configured to establish a sound zone comprising:

    a room encompassing a listening position;
    a loudspeaker arrangement disposed in the room in the vicinity of the listening position, the loudspeaker arrangement configured to receive a multiplicity of electrical loudspeaker drive signals and to convert them into sound radiated to the listening position so that a maximum sound energy of the radiated sound is concentrated at the listening position; and
    a signal processing arrangement operatively connected upstream of the loudspeaker arrangement, the signal processing block comprising a multiple-input multiple-output system and being configured to process at least one input signal and to provide the multiplicity of loudspeaker drive signals; wherein
    the loudspeaker arrangement comprises at least one line array of loudspeakers, the at least one line array of loudspeakers comprising at least three loudspeakers with centers disposed in a line and distributed along the line according to a non-linear center to center distance scheme.

2. The system of claim 1, wherein

    the at least three loudspeakers include one loudspeaker disposed at one end of the line and one loudspeaker disposed at the other end of the line; and
    center to center distances between neighboring loudspeakers increasing non-linearly from one end of the line to the other end of the line.

3. The system of claim 1, wherein the line array of loudspeakers comprises:

    an inner pair of loudspeakers configured to receive one of the loudspeaker drive signals from the signal processing arrangement;
    a center point along the line array, wherein the inner pair of loudspeakers is centered about the center point with a center to center distance between the loudspeakers of the first pair of loudspeakers; and
    at least two subsequent pairs of loudspeakers including an outer pair of loudspeakers, arranged in line with the inner pair of loudspeakers and centered about the center point, the at least two subsequent pairs of loudspeakers being spaced such that the center to center distance between the loudspeakers of each of the subsequent pairs of loudspeakers increases non-linearly from the inner pair of loudspeakers to the outer pair of loudspeakers.

4. The system of claim 3, further comprising a single loudspeaker disposed on the center point of the line array.

5. The system of any of claims 1 - 4, wherein the line of the at least one line array of loudspeakers is curved.

6. The system of claim 5, wherein the curved line of the at least one line array of loudspeakers is configured to form at least one helix.

7. The system of any of claims 1 to 6, wherein the non-linear center to center distance scheme includes a logarithm based or exponentiation based center to center distance scheme.

8. The system of any of claims 1 to 7, further comprising at least one additional line array, wherein the line array and the at least one additional line array are disposed at a predetermined angle to each other.

9. The system of claim 8, wherein at least one of the at least one additional line array comprises at least three loudspeakers with centers disposed in a line and distributed along the line according to a non-linear center to center distance scheme.

10. The system of claim 8 or 9, wherein at least one of the at least one additional line array comprises at least three loudspeakers with centers disposed in a line and distributed along the line according to a linear center to center distance scheme.

11. The system of any of claims 8 - 10, wherein the line array and the at least one additional line array have a mutual center loudspeaker.

12. The system of any of claims 1 - 11, wherein the multiple-input multiple-output system is configured to provide in connection with the loudspeaker arrangement an acoustic beamforming structure; the acoustic beamforming structure being configured to further concentrate the maximum sound energy to the listening position.

13. The system of any of claims 1 to 12, wherein the room includes a roof lining and the loudspeaker arrangement is disposed in the roof lining of the room in the vicinity of the listening position.

14. The system of any of claims 1 to 13, wherein the room includes a center position and the loudspeaker arrangement is disposed at the center position in the room.

15. A method configured to establish a sound zone in a room encompassing a listening position, the method comprising:

converting with a loudspeaker arrangement disposed in the vicinity of the listening position a multiplicity of electrical loudspeaker drive signals into sound radiated to the listening position so that a maximum sound energy of the radiated sound is concentrated at the listening position; and
with a signal processing arrangement operatively connected upstream of the loudspeaker arrangement, processing at least one input signal and providing the electrical loudspeaker drive signals, the signal processing comprising a multiple-input multiple-output processing; wherein
the loudspeaker arrangement comprises at least one line array of loudspeakers, the at least one line array of loudspeakers comprising at least three loudspeakers with centers disposed in a line and distributed along the line according to a non-linear center to center distance scheme.

FIG 1

FIG 2

## FIG 3

## FIG 4

FIG 5

FIG 6

FIG 7

FIG 8

FIG 9

FIG 10

FIG 11

FIG 12

FIG 13

FIG 14

FIG 15

Europäisches
Patentamt

European
Patent Office

Office européen
des brevets

# EUROPEAN SEARCH REPORT

**Application Number**

EP 17 18 0255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/259831 A1 (HUTT STEVEN W [US] ET AL) 24 November 2005 (2005-11-24) | 1-5,12,14,15 | INV. H04R3/12 |
| Y | * paragraphs [0002], [0023] - [0025], [0053], [0056] * | 6-11,13 | |
| X | US 2014/098971 A1 (KADAR ISTVAN B [US]) 10 April 2014 (2014-04-10) | 1-4,7,12,15 | |
| Y | * paragraph [0019] - paragraph [0026] * | 7 | |
| A | | 6,8-11,13,14 | |
| X | WO 96/14723 A1 (DURAN BV [NL]; VRIES GERARD HENDRIK JOSEPH DE [NL]) 17 May 1996 (1996-05-17) | 1-4,8-11,15 | |
| Y | * page 2, line 16 - line 30 * | 7 | |
| A | US 2005/201582 A1 (HUGHES CHARLES E II [US] ET AL) 15 September 2005 (2005-09-15) * paragraphs [0005] - [0009] * | 1-15 | |
| Y | EP 0 807 990 A1 (BOEING CO [US]) 19 November 1997 (1997-11-19) | 6 | TECHNICAL FIELDS SEARCHED (IPC) |
| A | * column 2, line 30 - line 55; figure 1 * | 1-5,7-15 | H04R |
| Y | WO 2004/075601 A1 (1 LTD [GB]; HOOLEY ANTHONY [GB]; LENEL URSULA RUTH [GB]; GOUDIE ANGUS) 2 September 2004 (2004-09-02) | 8-11 | |
| A | * page 21, line 33 - page 23, line 6 * | 1-7,12-15 | |
| Y | US 2017/085990 A1 (SLADECZEK CHRISTOPH [DE] ET AL) 23 March 2017 (2017-03-23) | 13 | |
| A | * paragraph [0045] - paragraph [0048] * | 1-12,14,15 | |

The present search report has been drawn up for all claims

| Place of search | Date of completion of the search | Examiner |
|---|---|---|
| The Hague | 30 August 2017 | Pigniez, Thierry |

## ANNEX TO THE EUROPEAN SEARCH REPORT
## ON EUROPEAN PATENT APPLICATION NO.

EP 17 18 0255

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2017

| Patent document cited in search report | | Publication date | Patent family member(s) | | Publication date |
|---|---|---|---|---|---|
| US 2005259831 | A1 | 24-11-2005 | AT | 531206 T | 15-11-2011 |
| | | | CA | 2515281 A1 | 19-11-2005 |
| | | | CN | 1778141 A | 24-05-2006 |
| | | | EP | 1634479 A1 | 15-03-2006 |
| | | | JP | 4243612 B2 | 25-03-2009 |
| | | | JP | 2008506275 A | 28-02-2008 |
| | | | KR | 20060052666 A | 19-05-2006 |
| | | | KR | 20070104668 A | 26-10-2007 |
| | | | US | 2005259831 A1 | 24-11-2005 |
| | | | WO | 2005115050 A1 | 01-12-2005 |
| US 2014098971 | A1 | 10-04-2014 | NONE | | |
| WO 9614723 | A1 | 17-05-1996 | AT | 176843 T | 15-03-1999 |
| | | | AU | 3882695 A | 31-05-1996 |
| | | | DE | 69507896 D1 | 25-03-1999 |
| | | | DE | 69507896 T2 | 26-08-1999 |
| | | | DK | 0791279 T3 | 10-05-1999 |
| | | | EP | 0791279 A1 | 27-08-1997 |
| | | | ES | 2127570 T3 | 16-04-1999 |
| | | | GR | 3029864 T3 | 30-07-1999 |
| | | | JP | 3274470 B2 | 15-04-2002 |
| | | | JP | H09512159 A | 02-12-1997 |
| | | | NL | 9401860 A | 03-06-1996 |
| | | | US | 6128395 A | 03-10-2000 |
| | | | WO | 9614723 A1 | 17-05-1996 |
| US 2005201582 | A1 | 15-09-2005 | EP | 1736027 A2 | 27-12-2006 |
| | | | US | 2005201582 A1 | 15-09-2005 |
| | | | WO | 2005091809 A2 | 06-10-2005 |
| EP 0807990 | A1 | 19-11-1997 | CA | 2204298 A1 | 17-11-1997 |
| | | | CN | 1169540 A | 07-01-1998 |
| | | | DE | 69705357 D1 | 02-08-2001 |
| | | | DE | 69705357 T2 | 11-10-2001 |
| | | | EP | 0807990 A1 | 19-11-1997 |
| | | | JP | 3866828 B2 | 10-01-2007 |
| | | | JP | H1093335 A | 10-04-1998 |
| | | | KR | 100454669 B1 | 29-12-2004 |
| | | | US | 6205224 B1 | 20-03-2001 |
| WO 2004075601 | A1 | 02-09-2004 | AT | 427629 T | 15-04-2009 |
| | | | CN | 1754403 A | 29-03-2006 |
| | | | EP | 1600035 A1 | 30-11-2005 |
| | | | EP | 1921890 A2 | 14-05-2008 |
| | | | JP | 2006518956 A | 17-08-2006 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 18 0255

This annex lists the patent family members relating to the patent documents cited in  the above-mentioned European search report.
The members are as contained in the European Patent Office EDP file on
The European Patent Office is in no way liable for these particulars which are merely given for the purpose of information.

30-08-2017

| Patent document cited in search report | Publication date | Patent family member(s) | Publication date |
|---|---|---|---|
| | | KR 20050101571 A | 24-10-2005 |
| | | US 2006204022 A1 | 14-09-2006 |
| | | WO 2004075601 A1 | 02-09-2004 |
| US 2017085990 A1 | 23-03-2017 | CN 106664489 A | 10-05-2017 |
| | | DE 102014217344 A1 | 17-12-2015 |
| | | EP 3152925 A2 | 12-04-2017 |
| | | JP 2017523654 A | 17-08-2017 |
| | | KR 20170015371 A | 08-02-2017 |
| | | US 2017085990 A1 | 23-03-2017 |
| | | WO 2015185727 A2 | 10-12-2015 |

EPO FORM P0459

For more details about this annex : see Official Journal of the European Patent Office, No. 12/82

page 2 of 2